# EUROPÄISCHE PATENTSCHRIFT

(11) **EP 2 050 877 B1**
(45) Veröffentlichungstag und Bekanntmachung des Hinweises auf die Patenterteilung: **07.12.2011**
(21) Anmeldenummer: 08017615.9
(22) Anmeldetag: 08.10.2008
(51) Int. Cl.: E02B 3/10, E04B 1/61

(54) **Hochwasser-Schutzwand**
Flood protection wall
Paroi de protection contre les inondations

(30) Priorität: 15.10.2007 DE 102007049519
(43) Veröffentlichungstag der Anmeldung: 22.04.2009
(73) Patentinhaber: Barich, Lutz, 57250 Netphen (DE); Barich, Rotger, 54439 Saarburg-Kahren (DE)
(72) Erfinder: Barich, Lutz, 57250 Netphen (DE); Barich, Rotger, 54439 Saarburg-Kahren (DE); Jensen, Jürgen Prof. Dr.-Ing., 57250 Netphen (DE)
(74) Vertreter: advotec.

(56) Entgegenhaltungen:
- WO-A-01/11147
- WO-A-03/100175
- DE-A1- 2 842 353
- DE-A1- 10 326 680
- FR-A- 2 876 716
- GB-A- 2 371 068

## Beschreibung

Die Erfindung bezieht sich auf eine Hochwasser-Schutzwand, bestehend aus in Beton erdbodenbündig einzubettenden Bodenankern, aus mit diesen lösbar verbundenen Stützpfosten und aus Wandelementen, wobei jeweils zwischen zwei Stützpfosten ein Wandelement eingesetzt ist, wobei die Wandelemente in einer Nut auf der zum Hochwasser hin gerichteten Seite des Stützpfostens gehalten sind, und wobei zwei benachbarte Wandelemente durch Halteelemente in der Nut einspannbar sind.

Naturkatastrophen wie Hochwasser treten heutzutage leider immer häufiger auf. Dazu werden vor allem in Städten mit Flussläufen Schutzwände aufgebaut, um gefährdete Gebäude vor dem Hochwasser zu schützen. Der Aufbau der bekannten Schutzwände gestaltet sich zumeist sehr zeit- und kostenaufwendig, wobei z.T. die Sicherheit der Schutzwände gegen das Hochwasser zu wünschen übrig lässt.

In DE 199 21 741 C2 ist ein variables Hochwasser-Stausystem, bestehend aus wenigstens einer Stauplatte, Bodenankerschiene und seitlichen Haltemasten mit Bodenankerfüßen beschrieben. Die Stauplatte ist dabei in Nuten der Haltemasten und der Bodenankerschiene eingeschoben und bildet mit diesen einen festen Verbund.

Die DE 198 07 141 A1 beschreibt eine Schutzwand für die Errichtung auf befestigten Flächen, insbesondere demontierbare Schutzwand für den Hochwasserschutz. Dabei besteht die Schutzwand aus wenigstens einer in der befestigten Fläche plan verlaufenden Metallschiene, wenigstens zwei auf der Metallschiene angeordneten und mit dieser im Einsatzfall fest verbundenen Pfosten und einem oder mehreren, zwischen zwei jeweils benachbarten Pfosten einsetzbaren Balkenelementen.

Eine demontierbare Hochwasserschutzwand mit in ortsfest angeordneten Aufnahmen lösbar eingesetzten Pfosten ist in DE 195 12 544 C1 beschrieben. Die Pfosten weisen in der Ebene der Schutzwand verlaufende Nuten auf, wobei zwischen den Pfosten in den Nuten von oben einschiebbare Plattenelemente vorgesehen sind, die eine standardisierte Form aufweisen.

In der DE 103 26 680 B4 ist eine Hochwasser-Schutzwand der angegebenen Gattung beschrieben, bei der das Wandelement vorzugsweise zum Hochwasser hin ausgeformt ist. Versuche haben jedoch ergeben, dass entgegen den Erwartungen die Stabilität der Wandelemente sehr zu wünschen übrig lassen.

Eine derartige Hochwasser-Schutzwand, bei der das Wandelement bzw. die Tafelelemente des Wandelementes zum Hochwasser hin ausgeformt ist bzw. sind, ist auch in der FR 2 876 716 A1 beschrieben. Dieses Dokument zeigt die Merkmale des Oberbegriffs in Anspruch 1, wobei auch hier die Stabilität, wie zuvor beschrieben, nicht ausreichend ist, wozu noch die Vielzahl von Tafelelementen eines Wandelementes beiträgt.

Die WO 03/100175 A1 beschreibt eine mobile Wand zum Hochwasserschutz, die aus mindestens zwei Profilträgern besteht, zwischen denen eine wasserundurchlässige Folie derart befestigt ist, dass deren unterer Rand die Unterkante der Profilträger überlappt. Der Einsatz einer Folie zur Erstellung einer Hochwasser-Schutzwand erscheint nicht geeignet, da diese den sehr starken Belastungen durch das Hochwasser kaum standhalten kann.

In der DE 28 42 353 A1 ist eine Dammkonstruktion beschrieben, die mehrere, auf die Länge des Dammes verteilte Tragrahmen und ein flexible Materialbahn mit einem Mittelteil und oberen und unteren Randteilen aufweist. Da die flexible Materialbahn auch hier eine Folie zu sein scheint, erscheint auch diese Dammkonstruktion ungeeignet für die sehr starken Belastungen durch das Hochwasser.

Der Erfindung liegt die Aufgabe zugrunde, eine Hochwasser-Schutzwand zu schaffen, die zum einen sehr schnell und einfach errichtet und auch entfernt werden kann, und bei der zum anderen vor allem die Stabilität der eigentlichen Schutzwand und auch eine ordnungsgemäße Abdichtung durch die besondere Ausbildung der die Wandelemente aufnehmenden Nuten und der Wandelemente selbst sichergestellt ist.

Diese Aufgabe wird erfindungsgemäß durch eine Hochwasser-Schutzwand mit den Kennzeichnungsmerkmalen des Patentanspruchs 1 gelöst.

Zweckmäßige Weiterbildungen der Erfindung sind in den Unteransprüchen gekennzeichnet.

Die erfindungsgemäße Hochwasser-Schutzwand zeichnet sich zunächst durch ihre relativ einfache und schnelle Montage sowie Demontage aus. Die vom Hochwasser weg ausgeformten Wandelemente der Hochwasser-Schutzwand mit den an den seitlichen Enden der Wandelemente angeformten Abwinklungen, die in den schwalbenschwanzartigen Nuten der Stützpfosten gehalten und eingespannt sind, sorgen für eine hohe Stabilität der Hochwasser-Schutzwand gegen den Wasserdruck.

Weitere Vorteile der Erfindung ergeben sich aus der nachfolgenden Beschreibung anhand eines die Erfindung wiedergebenden und in der Zeichnung z.T. schematisch dargestellten Ausführungsbeispieles. Dabei zeigt bzw. zeigen
- Fig. 1: perspektivisch die erfindungsgemäße Hochwasser-Schutzwand vom Hochwasser aus gesehen,
- Fig. 2: einen Querschnitt im Bereich der Stützpfosten nach der Linie II-II in Fig. 1,
- Fig. 3: einen Teillängsschnitt im Bereich des oberen Endes des Stützpfostens nach der Linie III-III in Fig. 1,
- Fig. 4: einen Längsschnitt durch ein Wandelement nach der Linie IV-IV in Fig. 1,
- Fig. 5: einen Längsschnitt durch das Kupplungsstück im Zusammenwirken mit dem Stützpfosten und dem Bodenanker vor dem Anziehen der Spannstücke,
- Fig. 6: einen vergrößerten Ausschnitt VI in Fig. 1, in dem hochwasserseitig der untere Bereich des Stützpfostens bzw. des Halteelementes dargestellt ist,
- Fig. 7: perspektivisch eine vergrößerte Ansicht des Spannelementes,
- Fign. 8a bis 8i: den Montageablauf der Hochwasser-Schutzwand vom Einbetonieren der Bodenhülse bis zur fertigen Hochwasser-Schutzwand,
- Fig. 9: perspektivisch einen Stützpfosten mit einer an diesem angreifenden Strebe und
- Fig. 10: einen Längsschnitt durch den Stützpfosten mit Strebe nach Fig. 9.

Die in den Figuren dargestellte Hochwasser-Schutzwand 1 besteht im wesentlichen aus folgenden Einzelteilen: in Beton einzubettende Bodenanker 2, Kupplungsstücke 3, Stützpfosten 4, Wandelemente 5, Halteelemente 6 und Spannelemente 7.

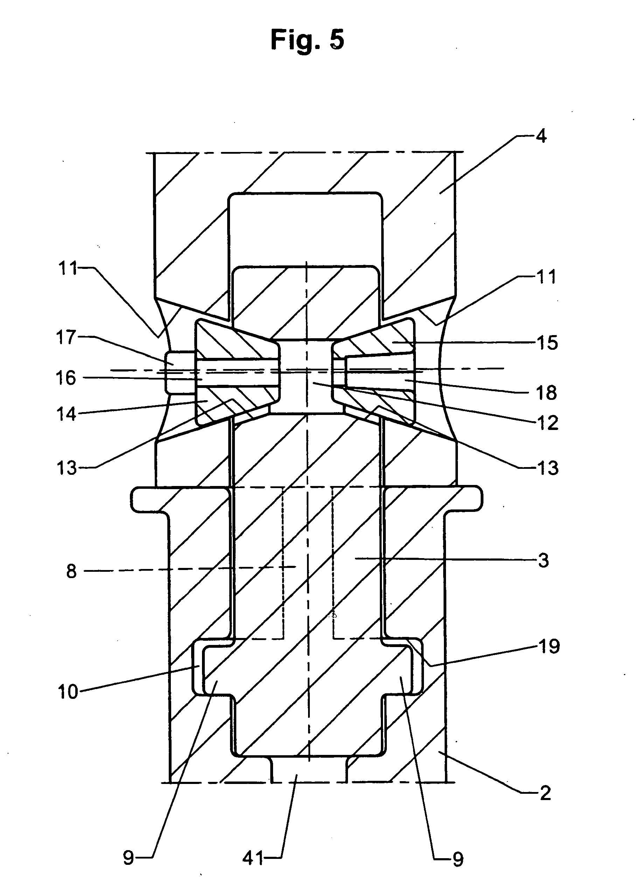

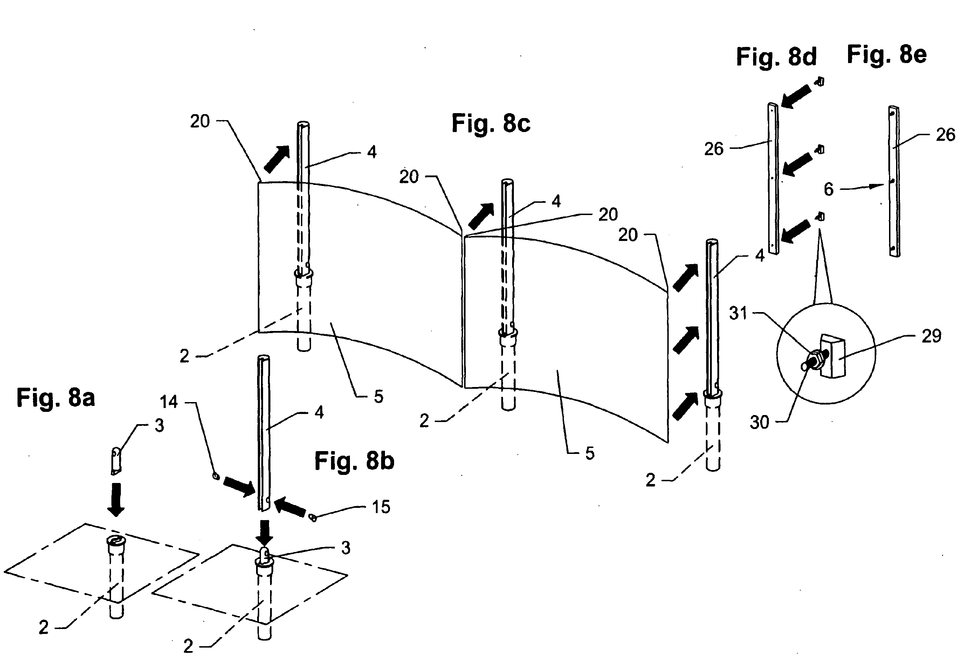

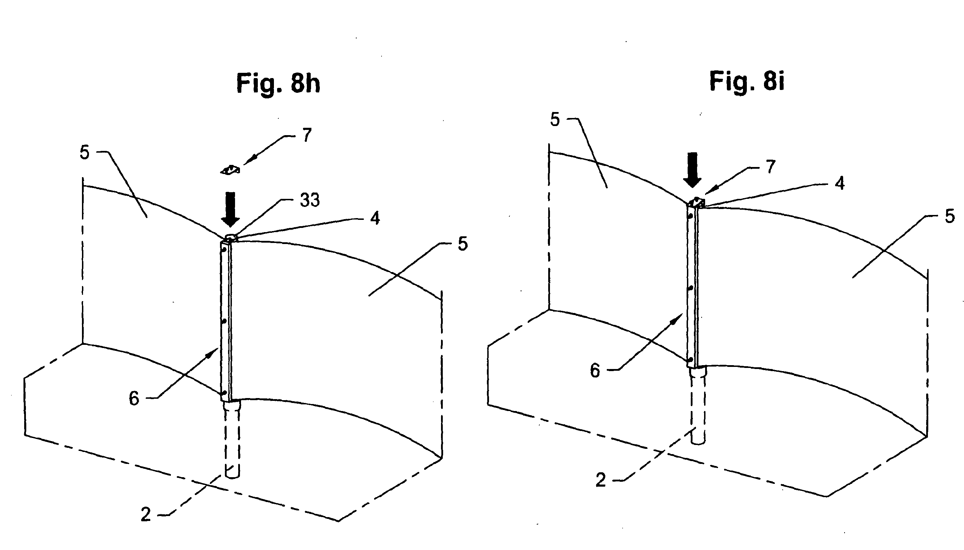

Die Bodenanker 2 werden vorteilhaft in Beton (nicht dargestellt) entlang dem Ufer eines Flusslaufes im Bereich einer Stadt o.dgl. in einem vorbestimmten Abstand verankert. Bei zu erwartendem Hochwasser wird jeweils das Kupplungsstück 3 über Längsnuten 8 (siehe insbesondere Fig. 5 und 8a) in den Bodenanker 2 eingesteckt und durch eine Drehung um 90° bajonettartig gekuppelt. Dabei greifen Nocken 9 des Kupplungsstücks 3 in eine entsprechende Innenumfangsnut 10 des Bodenankers 2 ein.

Danach wird der Stützpfosten 4 auf das Kupplungsstück 3 so aufgesetzt (siehe Fig. 8b), dass konische Querbohrungen 11 des Stützpfostens 4 (siehe Fig. 5) mit einer Querbohrung 12 des Kupplungsstücks 3 fluchten, die an beiden Enden jeweils eine konische Erweiterung 13 aufweist.

Daraufhin werden zwei kegelförmige Spannstücke 14 und 15 von beiden Seiten des Stützpfostens 4 in die konischen Querbohrungen 11 desselben so eingesetzt, dass die Spannstücke 14, 15 bereits ein Stück in die konischen Erweiterungen 13 der Querbohrung 12 des Kupplungsstücks 3 eingreifen.

Das schraubenseitige Spannstück 14 weist eine Durchgangsbohrung 16 für eine Schraube 17 auf, während das mutterseitige Spannstück 15 bei dem beschriebenen Ausführungsbeispiel einen etwas konischen Innensechskant 18 zum kraftschlüssigen Einklemmen der zur Schraube 17 passenden Mutter (nicht dargestellt) aufweist. Die Mutter wird so tief in dem Innensechskant 18 des Spannstücks 15 aufgenommen, dass ein Sechskantschlüssel herkömmlichen Typs (nicht dargestellt) noch über der Mutter in den Innensechskant 18 eingesteckt werden kann, um gegenzuhalten, wenn die Schraube 17, die einen Mehrkantkopf, z.B. Dreikant oder Vierkant, aufweist, mit einem entsprechenden Spezialschlüssel (nicht dargestellt) angezogen wird.

Bei einer nicht dargestellten Ausführung der Spannstücke 14, 15 weist das mutterseitige Spannstück 15 lediglich eine koaxiale Eindrehung auf, in die die Mutter eingesetzt ist.

Das mutterseitige Spannstück 15 kann auch in dessen konzentrischer Durchgangsbohrung ein Gewinde aufweisen, so dass das Spannstück 15 gleichzeitig als Mutter dient und die zusätzliche Mutter nicht notwendig ist (nicht dargestellt).

Beim Anziehen der Schraube 17 werden die Spannstücke 14, 15, die zunächst mit Spiel in der jeweiligen konischen Querbohrung 11 des Stützpfostens 4 und in den konischen Erweiterungen 13 der Querbohrung 12 des Kupplungsstücks 3 sitzen (siehe Fig. 5), nach innen gezogen, um durch eine Art Keilwirkung das Kupplungsstück 3 nach oben zu ziehen und gleichzeitig den Stützpfosten 4 nach unten auf den Bodenanker 2 zu drücken. Dieser Vorgang wird begrenzt durch den Anschlag der Nocken 9 des Kupplungsstücks 3 an der oberen Wand 19 der Innenumfangsnut 10 des Bodenankers 2 und wird durch die Darstellung in Fig. 5 verständlich.

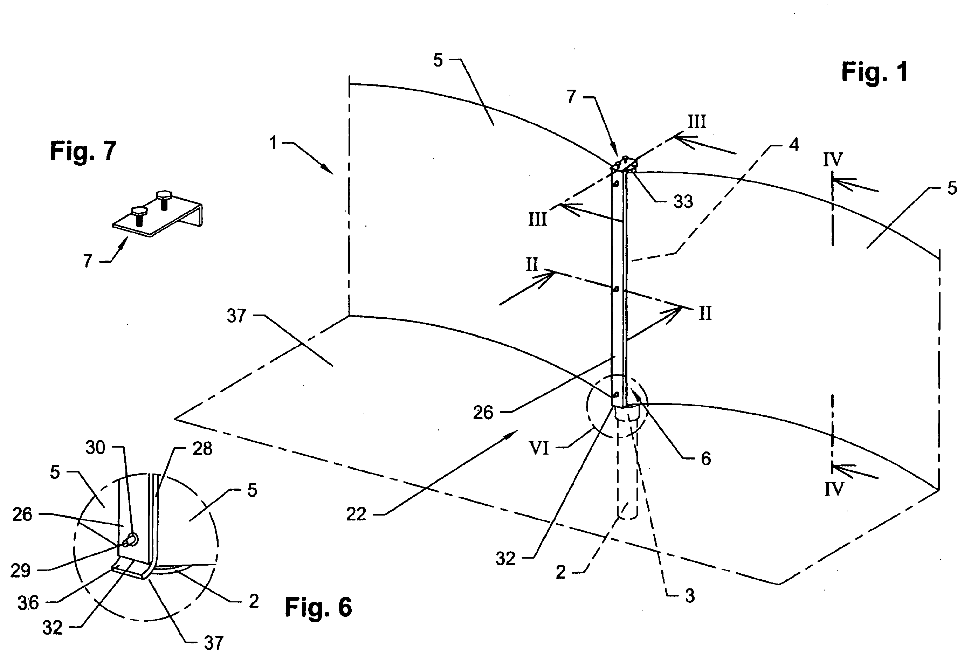

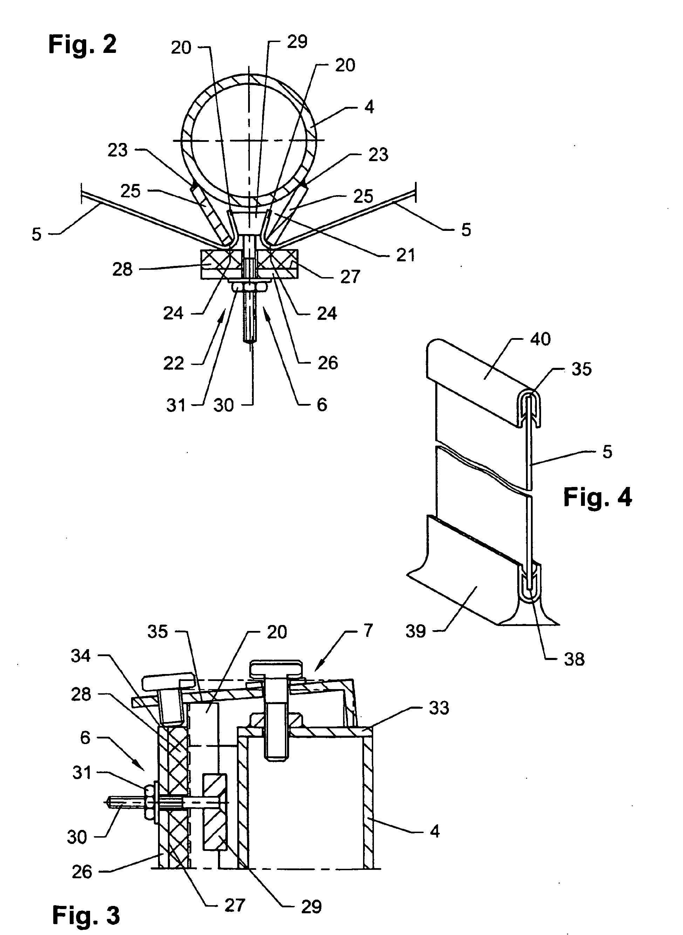

Jeweils zwischen zwei wie zuvor beschrieben eingesetzten Stützpfosten 4 ist ein Wandelement 5, vorzugsweise ein vom Hochwasser weg ausgeformtes, beispielsweise gewölbtes Wandelement 5 einsetzbar (siehe Fig. 1 und 8c). An den seitlichen Enden der Wandelemente 5 sind jeweils vom Hochwasser weg gerichtete Abwinklungen 20 angeformt, die in schwalbenschwanzartigen Nuten 21 auf der zum Hochwasser hin gerichteten Seite 22 der Stützpfosten 4 eingesetzt werden und dort gehalten sind. Die schwalbenschwanzartigen Nuten 21 der Stützpfosten 4 werden dabei jeweils durch zwei mit ihren einen Längskanten 23 seitlich an den Stützpfosten 4 angeschweißten und mit ihren anderen freien Längskanten 24 aufeinander zulaufenden Flachstäben 25 gebildet (siehe insbesondere Fig. 2).

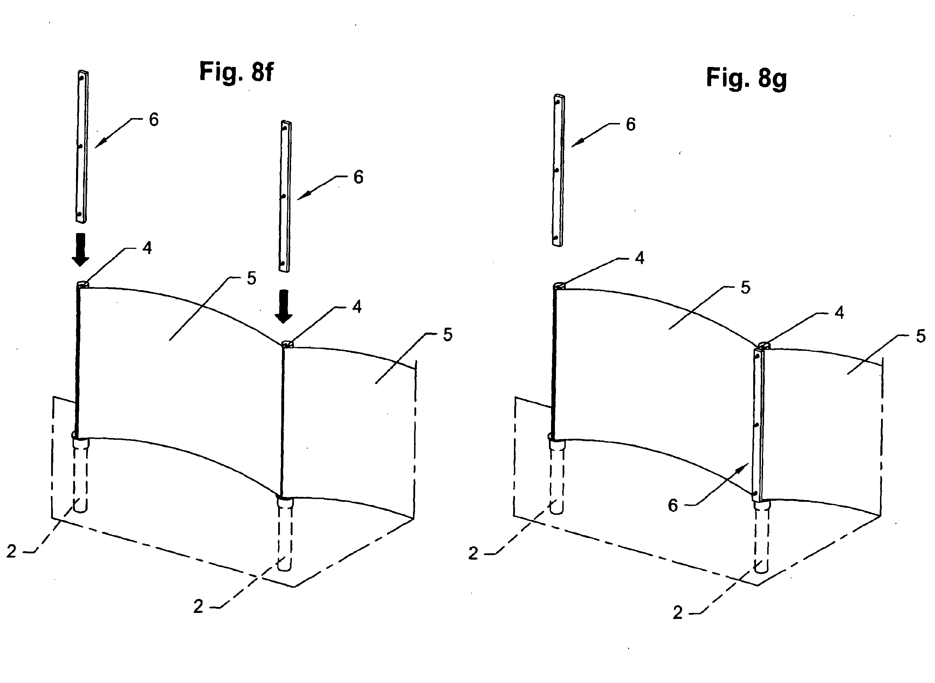

Zur dauerhaften Befestigung der Wandelemente 5 an den Stützpfosten 4 werden die Abwinklungen 20 zweier Wandelemente 5 über die Halteelemente 6 (siehe Fig. 8e) in den schwalbenschwanzartigen Nuten 21 eingespannt. Dazu bestehen die Haltelemente 6 jeweils aus einer Klemmschiene 26, auf deren zu den Abwinklungen 20 gerichteten Seite 27 eine längsverlaufende Dichtung 28 vorgesehen ist. An der Klemmschiene 26 sind mehrere längs derselben verteilte, im Querschnitt trapezförmige Nutensteine 29 über eine Schraube 30 mit Mutter 31 angeordnet (siehe Fig. 2 und 8d). Die komplett bestückten Haltelemente 6 werden von oben mit den trapezförmigen Nutensteinen 29 in die schwalbenschwanzartige Nuten 21 eingeschoben (siehe Fig. 8f und 8g), und die Muttern 31 werden von Hand leicht angezogen. Dabei werden die Abwinklungen 20 des jeweiligen Wandelementes 5 zwischen der Dichtung 28 der Klemmschiene 26 und den freien Längskanten 24 der Flachstäbe 25 des Stützpfostens 4 über die trapezförmigen Nutensteine 29 eingespannt.

Die Dichtung 28 der Klemmschiene 26 steht zur optimalen Abdichtung vorzugsweise über die untere Kante 32 derselben über. Nach dem Aufsetzen der jeweils am oberen Ende 33 der Stützpfosten 4 befestigten, vertikal auf die obere Kante 34 der Klemmschiene 26 und auf die oberen Kanten 35 der Wandelemente 5 bzw. die Abwinklungen 20 der Wandelemente 5 wirkenden Spannelemente 7 (siehe Figuren 3, 7, 8h und 8i) wird der überstehende Teil 36 der Dichtung 28 zwischen dem Boden 37 und der unteren Kante 32 der Klemmschiene 26 eingespannt. Erst nach dem Einspannen der überstehenden Teile 36 der Dichtungen 28 werden die Muttern 31 der Halteelemente 6 festgezogen.

Eine Ausführungsform der Spannelemente 7 ist beispielsweise insbesondere in Fig. 3 dargestellt und wird durch die Darstellung verständlich. Bei einer weiteren, nicht dargestellten Ausführungsform der Spannelemente 7 sind dieselben nach Art einer Grimpzange ausgebildet, wobei beim Spannen eine der beiden Greifbacken am oberen Ende 33 des Stützpfostens 4 angreift und die andere Greifbacke auf die obere Kante 34 der Klemmschiene sowie auf die oberen Kanten 35 der Wandelemente 5 bzw. der Abwinklungen 20 der Wandelemente 5 wirkt.

Zur weiteren Abdichtung sind an den unteren Kanten 38 der Wandelemente 5 jeweils die Ränder der unteren Kanten 38 umgreifende Dichtprofile 39 vorgesehen.

An den oberen Kanten 35 der Wandelemente 5 sind vorzugsweise jeweils die Ränder der oberen Kanten 35 umgreifende Kantenschutzprofile 40 vorgesehen.

Zu der Hochwasser-Schutzwand 1 kann noch ein Deckel (nicht dargestellt) vorgesehen sein, der anstelle des Kupplungsstücks 3 und des Stützpfostens 4 bajonettartig in dem Bodenanker 2 verriegelt wird, wenn die Hochwasser-Schutzwand 1 nicht benötigt wird und nachdem nach Lockern der Schraube 17 der Stützpfosten 4 mitsamt dem Kupplungsstück 3 nach Rückdrehung um 90° aus dem Bodenanker 2 herausgenommen wurde. Der Deckel weist für den Bajonettverschluss ebenfalls Nocken auf, die im Gegensatz zu den Nocken 9 des Kupplungsstücks 3 in der Innenumfangsnut 10 des Bodenankers 2 kaum ein axiales Spiel haben.

Zu erwähnen wäre noch, dass zum Ablaufen von Wasser bzw. zum Absickern von Regenwasser der Bodenanker 2 hohl ist und zum Kupplungsstück 3 hin eine Axialbohrung 41 aufweist.

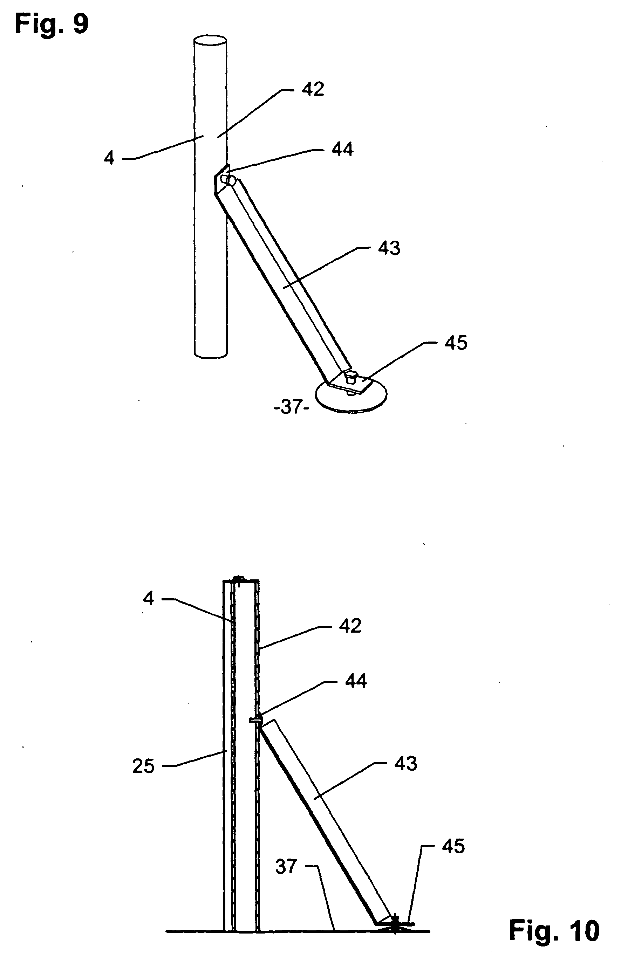

Je nach Höhe der jeweiligen Hochwasser-Schutzwand 1 kann ggf. zur Erhöhung der Stabilität derselben an der vom Hochwasser weg gerichteten Seite 42 des Stützpfostens 4 eine schräg nach unten gerichtete Strebe 43 mit einem Ende 44 befestigt sein, die mit ihrem anderen Ende 45 am Boden 37 befestigt ist und sich auf demselben abstützt (siehe Fig. 9 und 10).

Die Hochwasser-Schutzwand 1 bzw. deren einzelne Elemente können auch zur Erstellung von Swimming Pools, Behältnissen auf Baustellen oder sonstigen Behältnissen dienen.

Auch kann die Schutzwand 1 zur vorübergehenden Lagerung von losen Materialien, wie Baumaterialien, Recyclingabfällen, Streusalzen, Split usw. verwendet werden.

Ferner kann die Schutzwand 1 auch für eine zeitliche Trennung und/oder Kanalisierung von Menschenmassen, beispielsweise auf Jahr- oder Wochenmärkten, an Hafenanlagen, auf Flughäfen, Bahnhöfen, Messen, Sportveranstaltungen usw. verwendet werden.

### Bezugszeichen

- 1: Hochwasser-Schutzwand
- 2: Bodenanker von 1
- 3: Kupplungsstücke von 1 zwischen 2 und 4
- 4: Stützpfosten von 1
- 5: Wandelemente von 1 zwischen 4
- 6: Halteelemente von 1 für 5 an 4
- 7: Spannelemente von 1 für 6 an 4
- 8: Längsnuten in 2
- 9: Nocken an 3
- 10: Innenumfangsnut in 2
- 11: konische Querbohrungen in 4
- 12: Querbohrung in 3
- 13: konische Erweiterungen von 12
- 14: Spannstück (Schraubenseite)
- 15: Spannstück (Mutterseite)
- 16: Durchgangsbohrung in 14
- 17: Schraube in 16
- 18: Innensechskant von 15
- 19: obere Wand von 10
- 20: Abwinklungen an 5
- 21: schwalbenschwanzartige Nut an 4
- 22: zum Hochwasser hin gerichtete Seite von 4
- 23: die eine Längskante von 25 an 4
- 24: die andere freie Längskante von 25
- 25: Flachstäbe an 4
- 26: Klemmschiene von 6
- 27: zu 20 gerichtete Seite von 26
- 28: Dichtung auf 27
- 29: trapezförmige Nutensteine von 6
- 30: Schrauben für 29
- 31: Muttern auf 30
- 32: untere Kante von 26
- 33: oberes Ende von 4
- 34: obere Kante von 26
- 35: obere Kante von 5 bzw. 20
- 36: überstehender Teil von 28
- 37: Boden
- 38: untere Kanten von 5 bzw. 20
- 39: Dichtprofil an 38
- 40: Kantenschutzprofil an 35
- 41: Axialbohrung in 2
- 42: vom Hochwasser weg gerichtete Seite von 4
- 43: schräg nach unten verlaufende Strebe an 42
- 44: das eine Ende von 43
- 45: das andere Ende von 43

## Patentansprüche

1. Hochwasser-Schutzwand (1), bestehend aus in Beton erdbodenbündig einzubettenden Bodenankern (2), aus mit diesen lösbar verbundenen Stützpfosten (4) und aus Wandelementen (5), wobei jeweils zwischen zwei Stützpfosten (4) ein Wandelement (5) eingesetzt ist, wobei die Wandelemente (5) in einer Nut (21) auf der zum Hochwasser hin gerichteten Seite (22) des Stützpfostens (4) gehalten sind, und wobei zwei benachbarte Wandelemente (5) durch Haltelemente (6) in der Nut (21) einspannbar sind, **dadurch gekennzeichnet, dass** die Wandelemente (5) vom Hochwasser weg gewölbt sind, dass die Nut (21) eine schwalbenschwanzartige Nut ist, und dass an den seitlichen Enden der Wandelemente (5) jeweils eine Abwinklung (20) angeformt ist, die in der schwalbenschwanzartigen Nut (21) gehalten und durch Haltelemente (6) einspannbar sind.

2. Hochwasser-Schutzwand nach Anspruch 1, **dadurch gekennzeichnet, dass** die schwalbenschwanzartige Nut (21) des Stützpfostens (4) aus zwei mit ihren einen Längskanten (23) seitlich an den Stützpfosten (4) angeschweißten und mit ihren anderen freien Längskanten (24) aufeinander zulaufenden Flachstäben (25) gebildet ist.

3. Hochwasser-Schutzwand nach Anspruch 2, **dadurch gekennzeichnet, dass** die Haltelemente (5) jeweils aus einer Klemmschiene (26) bestehen, auf deren zu den Abwinklungen (20) gerichteten Seite (27) eine Dichtung (28) vorgesehen ist und an der mehrere längs der Klemmschiene (26) verteilte, im Querschnitt trapezförmige Nutensteine (29) über eine Schraube (30) mit Mutter (31) angeordnet sind, wobei die Abwinklungen (20) des jeweiligen Wandelementes (5) zwischen der Dichtung (28) der Klemmschiene (26) und den Längskanten (24) der Flachstäbe (25) des Stützpfostens (4) über die trapezförmigen Nutensteine (29) eingespannt sind.

4. Hochwasser-Schutzwand nach Anspruch 3, **dadurch gekennzeichnet, dass** die Dichtung (28) der Klemmschiene (26) über die untere Kante (32) derselben übersteht, wobei der überstehende Teil (36) der Dichtung (28) zwischen dem Boden (37) und der unteren Kante (32) der Klemmschiene (26) über ein am oberen Ende (33) des Pfostens (4) befestigtes und vertikal auf die obere Kante (34) der Klemmschiene (26) und auf die oberen Kanten (35) bzw. die Abwinklungen (20) der Wandelemente (5) wirkendes Spannelement (7) eingespannt ist.

5. Hochwasser-Schutzwand nach einem der Ansprüche 1 bis 4, **dadurch gekennzeichnet, dass** an der unteren Kante (38) der Wandelemente (5) jeweils ein den Rand der unteren Kante (38) umgreifendes Dichtprofil (39) vorgesehen ist.

6. Hochwasser-Schutzwand nach einem der Ansprüche 1 bis 5, **dadurch gekennzeichnet, dass** an der oberen Kante (35) der Wandelemente (5) jeweils ein den Rand der oberen Kante (35) umgreifendes Kantenschutzprofil (40) vorgesehen ist.

7. Hochwasser-Schutzwand nach einem der Ansprüche 1 bis 6, **gekennzeichnet durch** jeweils ein Kupplungsstück (3) zwischen Stützpfosten (4) und Bodenanker (2), das mit dem Bodenanker (2) bajonettartig verbindbar ist und eine Querbohrung (12) aufweist, die an beiden Enden konisch erweitert ist und in diesen konischen Erweiterungen 13, die sich im eingebauten Zustand in einander gegenüberliegenden konischen Querbohrungen (11) des Stützpfostens (4) fortsetzen, je ein im wesentlichen kegelförmiges Spannstück (14, 15) aufnimmt, wobei diese beiden Spannstücke (14, 15) mittels einer mit einem entsprechenden Spezialschlüssel betätigbaren Schraube (17) den Stützpfosten (4) in dem Bodenanker (2) innerhalb des Bajonettverschlusses kraftschlüssig festziehen und den Stützpfosten (4) gegen den Bodenanker (2) verspannen.

8. Hochwasser-Schutzwand nach Anspruch 7, **dadurch gekennzeichnet, dass** die Spannstücke (14, 15) in den konischen Erweiterungen (13) der Querbohrung (12) der Kupplungsstücke (3) und in den konischen Querbohrungen (11) der Stützpfosten (4) mit entsprechendem Spiel sitzen, derart, dass sie beim Anziehen der Schraube (17) jeweils eine Keilwirkung zum Bewegen des Kupplungsstücks (3) nach oben und des Stützpfostens (4) nach unten ausüben.

9. Hochwasser-Schutzwand nach einem der Ansprüche 1 bis 8, **gekennzeichnet durch** einen Deckel zum Abdecken des Bodenankers (2) bei abgenommenem Stützpfosten (4).

10. Hochwasser-Schutzwand nach Anspruch 9, **dadurch gekennzeichnet, dass** der Deckel mit dem Bodenanker (2) bajonettverschlussartig kuppelbar ist.

11. Hochwasser-Schutzwand nach einem der Ansprüche 1 bis 10,
**dadurch gekennzeichnet, dass** an der vom Hochwasser weg gerichteten Seite (42) des Stützpfostens (4) eine schräg nach unten gerichtete Strebe (43) mit einem Ende (44) befestigt ist, die mit ihrem anderen Ende (45) am Boden (37) befestigt ist und sich auf demselben abstützt.

## Claims

1. Protective flood wall (1), consisting of ground anchors (2) to be embedded in concrete flush with the ground, of supporting posts (4) connected detachably to the ground anchors and of wall elements (5), wherein between two supporting posts (4) there is inserted one wall element (5), wherein the wall elements (5) are held in a groove (21) on the side (22) of the supporting post (4) facing the flood, and wherein two adjacent wall elements (5) can be clamped in the groove (21) by retaining elements (6), **characterised in that** the wall elements (5) are curved away from the flood, that the groove (21) is a dovetail-like groove and that the lateral ends of the wall elements (5) each having formed a bend (20), which ends are held in the dovetail-like groove (21) and can be clamped by retaining elements (6).

2. Protective flood wall according to claim 1, **characterised in that** the dovetail-like groove (21) of the supporting post (4) is formed from two flat bars (25) which are welded laterally with one longitudinal edge (23) to the supporting post (4) and run towards each other with the other free longitudinal edge (24).

3. Protective flood wall according to claim 2, **characterised in that** the retaining elements (5) consist in each case of a clamping rail (26), on the side (27) facing the bends (20) of which a seal (28) is provided and on which a plurality of sliding blocks (29) are arranged by means of a bolt (30) and nut (31), which sliding blocks are distributed along the clamping rail (26) and have a trapezoidal cross section, wherein the bends (20) of the respective wall element (5) are clamped by means of the trapezoidal sliding blocks (29) between the seal (28) of the clamping rail (26) and the longitudinal edges (24) of the flat bars (25) of the supporting post (4).

4. Protective flood wall according to claim 3, **characterised in that** the seal (28) of the clamping rail (26) projects beyond the lower edge (32) of the same, wherein the projecting part (36) of the seal (28) is clamped between the ground (37) and the lower edge (32) of the clamping rail (26) by means of a tensioning element (7) which is fastened to the upper end (33) of the post (4) and acts vertically on the upper edge (34) of the clamping rail (26) and on the upper edges (35) and the bends (20) of the wall elements (5).

5. Protective flood wall according to one of claims 1 to 4, **characterised in that** in each case one sealing profile (39) which encloses the rim of the lower edge (38) is provided on the lower edge (38) of the wall elements (5).

6. Protective flood wall according to one of claims 1 to 5, **characterised in that** in each case one edge-protecting profile (40) which encloses the rim of the upper edge (35) is provided on the upper edge (35) of the wall elements (5).

7. Protective flood wall according to one of claims 1 to 6, **characterised by** in each case one coupling piece (3) between the supporting post (4) and the ground anchor (2), which coupling piece can be connected to the ground anchor (2) in a bayonet-like manner and has a transverse bore (12), which is conically widened at both ends, and in these conically widened sections (13), which in the installed state continue into mutually opposite conical transverse bores (11) of the supporting post (4), one essentially conical tensioning piece (14, 15) is accommodated, wherein these two tensioning pieces (14, 15) tighten the supporting post (4) in the ground anchor (2) inside the bayonet closure in a force-fitting manner by means of a bolt (17) which can be actuated with a corresponding special wrench and brace the supporting post (4) against the ground anchor (2).

8. Protective flood wall according to claim 7, **characterised in that** the tensioning pieces (14, 15) sit in the conical widened sections (13) of the transverse bore (12) of the coupling pieces (3) and in the conical transverse bores (11) of the supporting posts (4) with corresponding play in such a manner that when the bolt (17) is tightened they each exert a wedge effect in order to move the coupling piece (3) upwards and the supporting post (4) downwards.

9. Protective flood wall according to one of claims 1 to 8, **characterised by** a cover for covering the ground anchor (2) when the supporting post (4) is removed.

10. Protective flood wall according to claim 9, **characterised in that** the cover can be coupled in a bayonet-like manner to the ground anchor (2).

11. Protective flood wall according to one of claims 1 to 10, **characterised in that** a strut (43) is fastened with one end (44) to the side (42) of the supporting post (4) facing away from the flood, which strut points obliquely downwards and is fastened with its other end (45) to the ground (37) and is supported on the same.

## Revendications

1. Mur de protection contre les crues (1), constitué de tirants d'ancrage (2) à incorporer dans du béton en affleurement le sol, de poteaux de support (4) reliés à ceux-ci de façon détachable et d'éléments de mur (5), dans lequel un élément de mur (5) est respectivement installé entre deux poteaux de support (4), dans lequel les éléments de mur (5) sont maintenus dans une rainure (21), du côté (22) du poteau de support (4) qui est tourné vers l'eau, et dans lequel deux éléments de mur (5) voisins peuvent être serrés dans la rainure (21) à l'aide d'éléments de maintien (6), **caractérisé en ce que** les éléments de mur (5) sont voûtés en partant de l'eau, **en ce que** la rainure (21) est une rainure du genre queue d'aronde, et **en ce qu'**un coude (20) maintenu dans la rainure du genre queue d'aronde (21) et apte à être serré par les éléments de maintien (6) est formé à chacune des extrémités latérales des éléments de mur (5).

2. Mur de protection contre les crues selon la revendication 1, **caractérisé en ce que** la rainure du genre queue d'aronde (21) du poteau de support (4) est formée par deux barres plates (25) soudées latéralement au poteau de support (4) par leurs premières arêtes longitudinales (23), et se rejoignant entre elles par leurs autres arêtes longitudinales (24) libres.

3. Mur de protection contre les crues selon la revendication 2, **caractérisé en ce que** les éléments de maintien (5) sont constitués chacun d'un rail de serrage (26), un joint d'étanchéité (28) étant prévu sur le côté (27) de celui-ci qui est tourné vers les coudes (20), et sur lequel sont montés plusieurs coulisseaux (29) à section transversale en forme de trapèze, répartis le long du rail de serrage (26), à l'aide d'une vis (30) avec écrou (31), les coudes (20) de chacun des éléments de mur (5) étant serrés entre le joint d'étanchéité (28) du rail de serrage (26) et les arêtes longitudinales (24) des barres plates (25) du poteau de support (4), à l'aide des coulisseaux (29) en forme de trapèzes.

4. Mur de protection contre les crues selon la revendication 3, **caractérisé en ce que** le joint d'étanchéité (28) du rail de serrage (26) fait saillie sur une arête inférieure (32) de celui-ci, la partie saillante (36) du joint d'étanchéité (28) étant serrée entre le sol (37) et l'arête inférieure (32) du rail de serrage (26), par un élément de serrage (7) fixé à l'extrémité supérieure (33) du poteau (4) et agissant verticalement sur l'arête supérieure (34) du rail de serrage (26) et sur les arêtes supérieures (35) ou les coudes (20) des éléments de mur (5).

5. Mur de protection contre les crues selon l'une des revendications 1 à 4, **caractérisé en ce qu'**un profilé d'étanchéité (39) entourant respectivement le bord de l'arête inférieure (38) est prévu sur l'arête inférieure (38) de chacun des éléments de mur (5).

6. Mur de protection contre les crues selon l'une des revendications 1 à 5, **caractérisé en ce qu'**un profilé de protection d'arête (40) entourant respectivement le bord de l'arête supérieure (35) est prévu sur l'arête supérieure (35) de chacun des éléments de mur (5).

7. Mur de protection contre les crues selon l'une des revendications 1 à 6, **caractérisé par** une pièce d'accouplement (3) respective entre le poteau de support (4) et le tirant d'ancrage (2), apte à être reliée à la façon d'une baïonnette au tirant d'ancrage (2) et comportant un perçage transversal (12), évasé de façon conique aux deux extrémités et recevant une pièce de serrage (14, 15) en forme de quasi-quille dans chacun de ces évasements coniques (13), qui à l'état intégré se prolongent dans des perçages transversaux (11) coniques opposés du poteau de support (4), ces deux pièces de serrage (14, 15) permettant de bloquer le poteau de support (4) dans le tirant d'ancrage (2), à l'intérieur de la fermeture à baïonnette, et de serrer le poteau de support (4) contre le tirant d'ancrage (2), au moyen d'une vis (17) actionnable par une clé spéciale correspondante.

8. Mur de protection contre les crues selon la revendication 7, **caractérisé en ce que** les pièces de serrage (14, 15) sont installées dans les évasements coniques (13) du perçage transversal (12) des pièces d'accouplement (3), et dans les perçages transversaux coniques (11) des poteaux de support (4), avec un jeu correspondant, de manière à exercer un effet de coincement lors du serrage de la vis (17), en vue du déplacement de la pièce d'accouplement (3) vers le haut et du poteau de support (4) vers le bas.

9. Mur de protection contre les crues selon l'une des revendications 1 à 8, **caractérisé par** un couvercle permettant de recouvrir le tirant d'ancrage (2) lorsque le poteau de support (4) est retiré.

10. Mur de protection contre les crues selon la revendication 9, **caractérisé en ce que** le couvercle peut être accouplé au tirant d'ancrage (2) à la façon d'une fermeture à baïonnette.

11. Mur de protection contre les crues selon l'une des revendications 1 à 10, **caractérisé en ce que** du côté (42) du poteau de support (4) qui est détourné de l'eau, une bielle (43) orientée obliquement vers le bas est fixée par une extrémité (44) et fixée au sol (37) par son autre extrémité (45), tout en s'appuyant sur celui-ci.
